# FASCICULE DE BREVET EUROPEEN

(11) **EP 0 876 756 B1**
(45) Date de publication et mention de la délivrance du brevet: **05.03.2003**
(21) Numéro de dépôt: 98440084.6
(22) Date de dépôt: 06.05.1998
(51) Int. Cl.: A01G 17/08

(54) **Ecarteur pour relevage de vigne**
Abstandhalter zum Heben von Reben
Spacer for lifting vine

(30) Priorité: 07.05.1997 FR 9705794
(43) Date de publication de la demande: 11.11.1998
(73) Titulaire: S.C.D.C. Société Anonyme, 51270 Orbais (FR)
(72) Inventeur: Casters, Denis, 51270 Mareuil en Brie (FR)
(74) Mandataire: Rhein, Alain

(56) Documents cités:
- CH-A- 624 549
- CH-A- 636 498
- CH-A- 685 187
- DE-A- 3 126 697
- FR-A- 2 137 226
- FR-A- 2 348 646
- FR-A- 2 674 098
- US-A- 4 258 523

## Description

L'invention concerne un écarteur destiné à être rendu solidaire d'un piquet de vigne, notamment en son extrémité supérieure, par l'intermédiaire de moyens de fixation, en vue de faciliter le palissage, ledit écarteur adoptant une forme de fil métallique conformé de manière à définir deux branches écartées présentant, chacune, au moins un berceau pour la réception de fils de palissage.

La présente invention trouvera son application dans le domaine vinicole et du travail de la vigne, plus particulièrement, lorsqu'il s'agit de procéder au relevage de la vigne donc à son palissage.

Ainsi, lors de la croissance des sarments et du développement de la végétation, il arrive un moment où il est nécessaire de procéder à son relevage et au palissage. Pour cela, sont fixés, directement sur les piquets de vigne, des fils de palissage. Dans ces conditions l'opérateur doit saisir la végétation pour la relever et l'amener à hauteur de ces fils de palissage avant de la ligaturer.

Ce relevage de la vigne, s'il est nécessaire, permet, entre autre, d'augmenter la surface foliaire pendant la croissance de la végétation, mais également de favoriser la maturation des grains de raisin et l'administration des produits de traitement de la vigne.

En fait, on connaît d'ores et déjà plusieurs dispositifs destinés à faciliter cette opération de relevage de la vigne. Ces dispositifs agissent sur les fils de palissage. Plus particulièrement, ils ont pour fonction d'écarter les fils de palissage du piquet de vigne, de sorte que la végétation soit en mesure de croître entre deux fils de palissage s'étendant, précisément parallèlement de part et d'autre de ces piquets de vigne. Finalement, au travers de ces dispositifs, il est possible à l'opérateur de relever aisément ces fils de palissage tout en les rapprochant l'un de l'autre, d'ou résulte, bien entendu, le relevage de la végétation facilitant par là même l'opération de palissage.

De tels dispositifs, habituellement dénommés écarteurs, sont destinés à être rendus solidaires de l'extrémité supérieure d'un piquet de vigne par l'intermédiaire de moyens de fixation appropriés. En fait, ces écarteurs se présentent sous la forme d'un fil métallique comportant deux branches disposées sensiblement symétriquement par rapport audit piquet et de manière à former un dièdre ouvert vers le haut. Chaque branche comporte, sensiblement à son extrémité, un berceau destiné à la réception d'un fil de palissage par-dessus lequel viennent pendre les sarments de vigne. Le relevage de la vigne et donc des fils de palissage consiste alors à rapprocher lesdites branches et à les maintenir dans une position souvent verticale par fixation, notamment au moyen d'agrafes.

On remarquera que le fil métallique constituant l'écarteur doit présenter une certaine rigidité de manière à supporter le poids des fils de palissage, des branches et du feuillage de la vigne. Ceci se traduit par une certaine raideur et une résistance à la déformation desdites branches de l'écarteur ce qui, au moment de procéder à leur rapprochement et au maintien dans cette position en vue de leur fixation, nécessite un effort conséquent.

Evidemment, la raideur de ces dernières peut être étudiée de sorte qu'il soit possible, pour une même personne et avec une seule main, d'amener et de maintenir les deux branches dans leur position de relevage et de procéder à leur fixation, notamment au moyen d'une agrafe. Une telle fixation nécessite, d'une part, l'emploi d'une agrafe qui est un élément supplémentaire et indépendant de l'écarteur que la personne chargée de l'opération de relevage de la vigne est obligée de conserver à portée de main, notamment sous la forme d'une réserve d'agrafes, lourde et encombrante. D'autre part, la mise en place de ces dernières nécessite parfois l'emploi d'un outil spécifiquement adapté à un tel usage ce qui a pour effet d'encombrer davantage l'opérateur.

L'on connaît au travers du document français FR-2.674.098 une épingle de palissage pour la vigne se présentant sous la forme d'une tige rigide réalisée en une seule pièce et conformée de manière à définir, dans sa partie médiane, une boucle centrale au travers de laquelle ladite épingle est fixée sur un piquet de vigne. Cette boucle centrale est prolongée, de part et d'autre, par des branches droites situées dans le prolongement l'une de l'autre. Chacune de ces branches droits présente une extrémité conformée en boucle dont l'une est ouverte tandis que l'autre est refermée et prolongée par un crochet, chacune de ces boucles constituant un berceau pour un fil de palissage. En fait, la rigidité d'une telle épingle ne permet pas le rapprochement de ses branches. Aussi, lors de l'opération de palissage de la vigne, le fil traversant la boucle ouverte est extrait de son berceau et, par basculement de l'épingle autour de sa boucle centrale, le crochet est remonté vers le haut du piquet. C'est, précisément, à l'intérieur de ce crochet que va alors être glissé le fil précédemment extrait de son berceau.

L'on connaît, encore, au travers du document DE 31 26 697 un dispositif pour maintenir deux fils de palissage de part et d'autre du poteau d'une installation de palissage, plus particulièrement dans le domaine de la vigne. Un tel dispositif se présente sous la forme d'un boîtier rapporté sur ledit poteau et duquel est rendu solidaire un écarteur. Ce dernier adopte la forme d'un fil en acier flexible formant ressort et comportant deux branches raccordées entre elles par l'intermédiaire d'une spire centrale au niveau de laquelle l'écarteur est rendu solidaire dudit boîtier. Les branches de cet écarteur présentent, chacune, une extrémité libre conformée en boucle définissant un anneau pour la réception d'un fil de palissage. Après relevage des branches de cet écarteur, il est procédé à la mise en place d'une agrafe conçue apte à relier les deux fils de palissage en vue de leur maintien en position relevée.

Quoi qu'il en soit, on s'aperçoit que le relevage de la vigne est une opération particulièrement pénible, fastidieuse et très contraignante, du fait de son caractère manuel.

Une autre solution consiste, cependant, à effectuer un tel relevage de manière automatisée au moyen d'une machine. Ceci permet de rendre la tâche moins ingrate, mais présente l'inconvénient d'occasionner des destructions importantes au feuillage.

La présente invention se veut à même de répondre aux inconvénients précités au travers d'un écarteur intégrant des moyens susceptibles de rendre solidaires ses branches dans leur position de relevage, la conception et la mise en oeuvre de ces moyens étant particulièrement simple et aisée.

A cet effet, l'invention concerne un écarteur destiné à être rendu solidaire d'un piquet de vigne, notamment en son extrémité supérieure, par l'intermédiaire de moyens de fixation, en vue de faciliter le palissage, ledit écarteur adoptant une forme de fil métallique conformé de manière à définir deux branches écartées et présentant, chacune, au moins un berceau pour la réception de fils de palissage, caractérisé par le fait qu'il comporte des moyens d'accrochage directement associés à l'une au moins de ses branches et à même de coopérer avec l'autre branche en vue de les maintenir rapprochées suite à une opération de relevage de la vigne.

Les avantages résultant de la présente invention consistent en ce qu'il est désormais possible de rapprocher les deux branches de l'écarteur et, grâce à des moyens d'accrochage associés à ce dernier, de les maintenir dans cette position. Un tel maintien est assuré dans la continuité du mouvement de rapprochement desdites branches et sans que cela ne nécessite d'effort supplémentaire. Cette conception permet également à l'opérateur de procéder seul et de manière sensiblement moins pénible, au relevage de la vigne. On observera que cela évite également l'utilisation d'agrafes, voire d'un outil supplémentaire, facteurs d'encombrement et d'augmentation des risques de défaillance de la fixation.

L'invention concerne également différents modes de réalisation de moyens de fixation destinés à rendre l'écarteur solidaire d'un piquet de vigne. Certains de ces moyens de fixation permettent, notamment, de rendre un tel écarteur adaptable à tout type de piquet de vigne.

La présente invention sera mieux comprise à la lecture de la description qui va suivre se rapportant au dessin joint en annexe dans lequel :
- la figure 1 est une représentation schématisée et en éclatée d'un écarteur destiné à être rendu solidaire d'un piquet de vigne;
- la figure 2 est une vue analogue à la précédente correspondant à un écarteur destiné à être rendu solidaire d'un piquet de vigne en bois;
- la figure 3 est une vue schématisée d'un écarteur destiné à être rendu solidaire d'un piquet de vigne pourvu de moyens de retenue avec lesquels ledit écarteur est à même de coopérer;
- la figure 4 est une représentation schématisée d'un écarteur pourvu de moyens de fixation sur un piquet de vigne adoptant la forme d'un profilé, notamment en cornière.

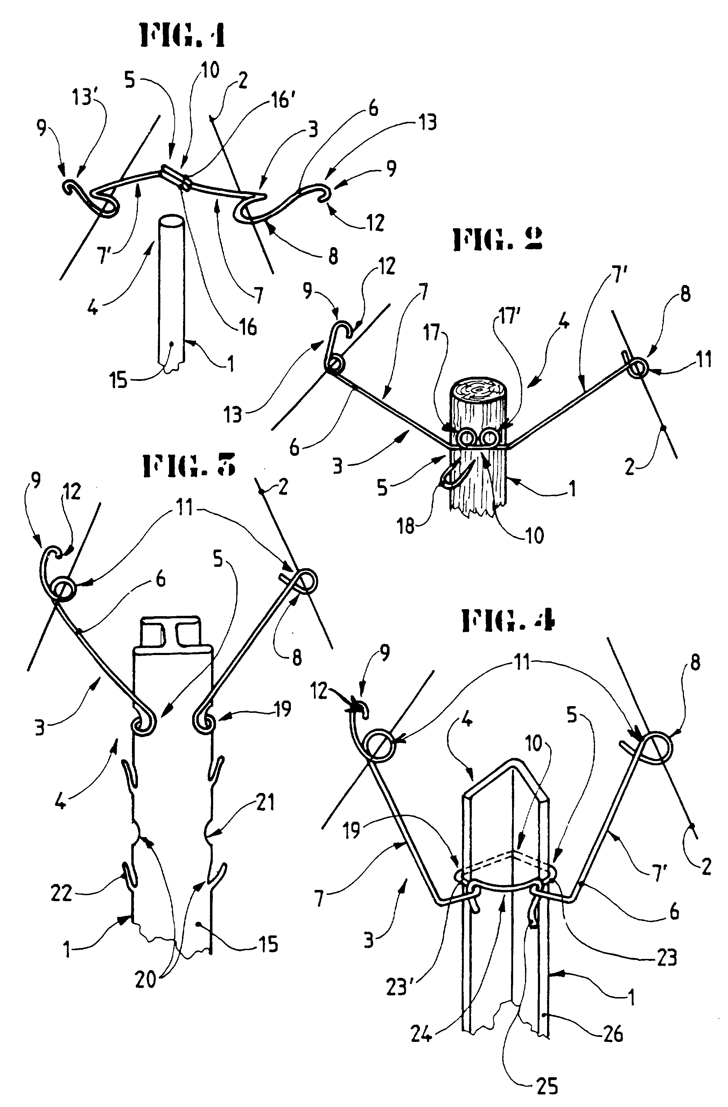

Telle que représentée dans les figures 1 à 4 du dessin ci-joint, la présente invention concerne le domaine vinicole et du travail de la vigne. Cette invention trouvera, plus particulièrement, son application lorsqu'il s'agit de procéder au relevage de la vigne.

Une telle vigne se présente sous la forme de ceps de vigne enterrés sensiblement dans le prolongement l'un de l'autre, de manière à former une rangée. A l'intérieur d'une telle rangée sont plantés, de loin en loin, des piquets de vigne 1 régulièrement espacés. Entre ces piquets 1 sont tendus, de manière sensiblement parallèle au sol, des fils de palissage 2.

Lors de la croissance de la vigne, les ceps développent des sarments à l'extrémité desquels poussent des feuilles définissant une surface foliaire. Ces sarments et ces feuilles sont amenés à pendre par-dessus lesdits fils de palissage 2 qu'il est avantageux de relever lors d'une opération de palissage.

Dans ce but, l'invention concerne un écarteur 3 destiné à être rendu solidaire d'un piquet de vigne 1, notamment en son extrémité supérieure 4, par l'intermédiaire de moyens de fixation 5.

Un tel écarteur 3 se présente sous la forme d'un fil métallique 6 conformé de manière à définir deux branches 7, 7' écartées et présentant, chacune, au moins un berceau 8 pour la réception de fils de palissage 2.

Selon l'invention, l'écarteur 3 comporte des moyens d'accrochage 9 directement associés à l'une au moins de ses branches 7, 7' et à même de coopérer avec l'autre branche, respectivement 7', 7, en vue de les maintenir rapprochées suite à une opération de relevage.

Comme il a été représenté dans les figures 1 à 4, le fil métallique 6 constituant l'écarteur 3 peut se présenter sous différentes formes résultant, notamment, de la déformation dudit fil métallique 6. Ce dernier comporte, sensiblement dans sa partie médiane 10, les moyens de fixation 5 résultant également de la déformation dudit fil métallique 6 lequel est prolongé, au delà et de part et d'autre desdits moyens de fixation 5, par les branches 7, 7'.

Tel qu'il a été représenté dans les figures du dessin ci-joint, ces branches 7, 7' sont conformées de manière à former, par exemple, une boucle 11, ouverte ou fermée, définissant, sensiblement, des berceaux 8 pour la réception des fils de palissage 2.

Quant aux moyens d'accrochage 9, ceux-ci se présentent, selon un mode de réalisation préférentiel de l'invention, sous la forme d'un crochet 12 résultant de la déformation de l'une au moins des extrémités 13, 13' du fil métallique 6, donc de l'extrémité de l'une au moins des branches 7, 7'.

Selon un autre mode de réalisation, ces moyens d'accrochage 9, sous forme d'un crochet 12, peuvent être rapportés sur l'une au moins des branches 7, 7' par des moyens appropriés, notamment par soudure, sertissage, ou similaire. Notamment, à titre d'exemple, ledit crochet 12 peut résulter de la déformation d'un tronçon de fil métallique dont l'une des extrémités est conformée en boucle montée coulissante sur l'une des branches 7, 7' de l'écarteur 3.

Ces moyens d'accrochage 9 en forme de crochet 12 peuvent tout particulièrement venir coopérer, soit directement avec l'autre branche, respectivement 7', 7, soit, encore, avec le berceau 8 équipant cette dernière.

Dans le cas où chacune des branches 7, 7' reçoit des moyens d'accrochage 9 sous forme de crochets 12, ceux-ci peuvent, dans ce cas, être engagés l'un dans l'autre pour maintenir lesdites branches 7, 7' en position relevée.

L'invention concerne également différents modes de réalisation des moyens de fixation 5 destinés à permettre à l'écarteur 3 d'être rendu solidaire d'un piquet de vigne 1. Ce dernier peut être constitué en des matériaux divers et/ou se présenter sous différents aspects conduisant à conférer aux moyens de fixation 5 de l'écarteur 3 une forme adaptée.

Ainsi, comme il a été représenté dans les figures 1, 3 et 4, un tel piquet de vigne 1 peut adopter la forme d'un profilé 15, par exemple en matériau métallique. Ce piquet 1 peut encore être en bois et présenter, notamment, une section sensiblement circulaire tel qu'il a été représenté figure 2.

La figure 1 correspond à un piquet de vigne 1 constitué par un profilé 15 qui, dans le cas présent, est de forme tubulaire et adopte une section circulaire. Selon un mode de réalisation particulièrement bien adapté à un tel piquet de vigne 1, les moyens de fixation 5 se présentent sous la forme d'une ou plusieurs spires 16, 16' réalisées par déformation dudit fil métallique 6. Ces spires 16, 16' sont destinées à venir se resserrer, notamment de manière élastique, sur le profilé 15 une fois emboîtées sur ce dernier.

Il est évident que de tels moyens de fixation 5 peuvent également être employés afin de solidariser un écarteur 3 d'un piquet de vigne 1 de forme différente et/ou réalisé dans un matériau différent.

Les moyens de fixation 5 peuvent se présenter sous la forme d'une ou plusieurs boucles 17, 17' obtenues, par exemple, par déformation du fil métallique 6. Ces boucles 17, 17' sont destinées à la réception et/ou au passage d'un ou plusieurs organes de fixation 18 du fil 6 sur ledit piquet 1. S'agissant d'un piquet de vigne 1 en bois, un tel organe de fixation 18 peut être constitué, en substance, par une vis, un clou ou analogue.

Finalement, comme il a été représenté dans les figures 3 et 4, les moyens de fixation 5 peuvent encore être définis par un fil métallique 6 conformé en forme de cavalier 19 destiné à être engagé sur le piquet de vigne 1.

De manière à empêcher l'écarteur 3 de glisser le long du piquet de vigne 1, ce dernier peut être pourvu de moyens de retenue 20. Dans le cas particulier d'un piquet 1 se présentant sous la forme d'un profilé 15, par exemple en métal, notamment un profilé de type ouvert en « I » tel que représenté figure 3, en « T », en « L » ou autre, de tels moyens de retenue 20 adoptent, le long de ce piquet 1, la forme d'une ou plusieurs découpes 21 et/ou languettes 22. Celles-ci sont réalisées par usinage, déformation ou analogue de la matière constituant ledit profilé 15 et sont destinées à coopérer avec le fil métallique 6 de l'écarteur 3. On observera que de tels moyens de retenue 20 peuvent également se présenter sous la forme de clous, de vis ou analogue rendus solidaires dudit piquet de vigne 1, plus particulièrement lorsque celui-ci est en bois.

Selon un autre mode de réalisation représenté figure 4, le cavalier 19 comporte deux branches 23, 23', tandis que des moyens de resserrage 24 sont à même d'assurer le rapprochement de ces branches 23, 23', en vue d'enserrer le piquet de vigne 1. Ces moyens de resserrage 24 se présentent, par exemple, sous la forme d'une agrafe 25 destinée à chevaucher lesdites branches 23, 23' et mise en place sur ces dernières, notamment par clipage.

Dans ce dernier mode de réalisation, ledit piquet de vigne 1 est constitué par un profilé en cornière 26. Cependant, il est évident que, moyennant une simple adaptation de la forme et/ou des dimensions dudit cavalier 19, un écarteur 3 présentant de tels moyens de fixation 5 est susceptible d'être rendu solidaire de n'importe quel type de piquet de vigne 1, notamment l'un de ceux décrits dans ce qui précède.

On observera que les moyens de fixation 5 faisant l'objet de la présente invention permettent avantageusement une mise en place aisée, rapide, précise, fiable et définitive de l'écarteur 3 sur le piquet de vigne 1 en un endroit sensiblement quelconque le long de ce dernier. Ceci permet, par conséquent, d'amener les fils de palissage 2 à la hauteur souhaitée par rapport au sol.

Par conséquent, la présente invention apporte un progrès considérable dans le domaine considéré.

## Revendications

1. Ecarteur (3) comprenant des moyens de fixation (5) permettant de le rendre solidaire d'un piquet de vigne (1), notamment en son extrémité supérieure (4), en vue de faciliter le palissage, ledit écarteur (3) adoptant une forme de fil métallique (6) conformé de manière à définir deux branches (7, 7') écartées et présentant, chacune, au moins un berceau (8) pour la réception de fils de palissage (2), **caractérisé par le fait qu'**il comporte en outre des moyens d'accrochage (9) directement associés à l'une au moins de ses branches (7, 7') et à même de coopérer avec l'autre branche (7', 7) en vue de les maintenir rapprochées suite à une opération de relevage de la vigne.

2. Ecarteur (3) selon la revendication 1, **caractérisé par le fait que** lesdits moyens d'accrochage (9) se présentent sous la forme d'un crochet (12) résultant de la déformation de l'une au moins des extrémités (13, 13') du fil métallique (6), donc de l'extrémité de l'une au moins des branches (7, 7').

3. Ecarteur (3) selon la revendication 1, **caractérisé par le fait que** les moyens d'accrochage (9) se présentent sous la forme d'un crochet (12) rapporté sur l'une au moins des branches (7, 7') du fil métallique (6) par des moyens appropriés, notamment par soudure, sertissage ou similaire.

4. Ecarteur (3) selon la revendication 1, **caractérisé par le fait que** le berceau (8) est défini par une boucle (11), ouverte ou fermée.

5. Ecarteur (3) selon l'une quelconque des revendications précédentes, **caractérisé par le fait que** les moyens de fixation (5) se présentent sous forme d'une ou plusieurs spires (16, 16') réalisées par déformation du fil métallique (6) et destinées à venir se resserrer, notamment de manière élastique, sur le piquet de vigne (1).

6. Ecarteur (3) selon l'une quelconque des revendications 1 à 4, **caractérisé par le fait que** lesdits moyens de fixation (5) se présentent sous la forme d'une ou plusieurs boucles (17, 17') destinées à la réception et/ou au passage d'un ou plusieurs organes de fixation (18) du fil (6) sur le piquet de vigne (1), tel qu'un clou, une vis ou analogue.

7. Ecarteur (3) selon l'une quelconque des revendications 1 à 4, **caractérisé par le fait que** les moyens de fixation (5) sont définis par un fil métallique (6) conformé en forme de cavalier (19) destiné à être engagé sur le piquet de vigne (1).

8. Ecarteur (3) selon la revendication 7, **caractérisé par le fait que** ledit piquet de vigne (1) est pourvu de moyens de retenue (20) se présentant, le long dudit piquet (1), sous la forme d'une ou plusieurs découpes (21) et/ou languettes (22) réalisées par usinage, déformation ou analogue de la matière constituant ledit piquet (1).

9. Ecarteur (3) selon la revendication 7, **caractérisé par le fait que** le cavalier (19) comporte deux branches (23, 23'), tandis que des moyens de resserrage (24) sont à même d'assurer le rapprochement de ces branches (23, 23') en vue d'enserrer ledit piquet de vigne (1).

10. Ecarteur (3) selon la revendication 9, **caractérisé par le fait que** lesdits moyens de resserrage (24) se présentent sous la forme d'une agrafe (25) destinée à chevaucher lesdites branches (23, 23') et mise en place sur ces dernières, notamment par clipage.

## Patentansprüche

1. Abstandhalter (3), welcher Befestigungsmittel (5) umfaßt, erlaubend, ihn fest mit einem Rebenpflock (1), insbesondere an seinem oberen Ende (4) zu verbinden, um das Pfählen zu erleichtern, wobei der besagte Abstandhalter (3) die Form eines Metalldrahtes (6) annimmt, der gestaltet ist, um zwei Schenkel (7, 7') zu definieren, die gespreizt sind und jeweils wenigstens einen Gewölbebogen (8) für die Aufnahme der Drähte zum Pfählen (2) aufweisen, **dadurch gekennzeichnet, daß** er außerdem Mittel zum Festhaken (9) umfaßt, die wenigstens einem seiner Schenkel (7, 7 ') direkt zugeordnet und fähig sind, mit dem anderen Schenkel (7, 7 ') zusammenzuwirken, um ihn infolge eines Hebungsvorgangs der Weinreben herangerückt zu halten.

2. Abstandhalter (3) nach Anspruch 1, **dadurch gekennzeichnet, daß** die besagten Mittel zum Festhaken (9) als ein Haken (12) ausgestaltet sind, der sich aus der Verformung von wenigstens einem der Enden (13, 13 ') des Metalldrahtes (6) ergibt, also des Endes von wenigstens einem der Schenkel (7, 7 ').

3. Abstandhalter (3) nach Anspruch 1, **dadurch gekennzeichnet, daß** die Mittel zum Festhaken (9) als ein Haken (12) ausgestaltet sind, der auf wenigstens einem der Schenkel (7, 7 ') des Metalldrahtes (6) durch angemessene Mittel, nämlich durch Schweißen, Falzen oder dergleichen, angebracht ist.

4. Abstandhalter (3) nach Anspruch 1, **dadurch gekennzeichnet, daß** der Gewölbebogen (8) durch eine Öse (11) definiert wird, die offen oder geschlossen ist.

5. Abstandhalter (3) nach irgendeiner der vorgehenden Ansprüche, **dadurch gekennzeichnet, daß** die Befestigungsmittel (5) als eine oder mehrere Windungen (16, 16 ') ausgestaltet sind, die durch Verformung des Metalldrahtes (6) realisiert werden und vorgesehen sind, sich insbesondere auf elastische Weise auf dem Rebenpflock (1) enger zu schnallen.

6. Abstandhalter (3) nach irgendeiner der Forderungen 1 bis 4, **dadurch gekennzeichnet, daß** die besagten Befestigungsmittel (5) als eine oder mehrere Ösen (17, 17 ') ausgestaltet sind, vorgesehen für die Aufnahme und/oder für den Durchgang von einem oder mehreren Organen zur Befestigung (18) des Drahtes (6) auf dem Rebenpflock (1), wie einem Nagel, einer Schraube oder dergleichen.

7. Abstandhalter (3) nach irgendeiner der Ansprüche 1 bis 4, **dadurch gekennzeichnet, daß** die Befestigungsmittel (5) durch einen Metalldraht (6) definiert sind, der als eine Krampe (19) gestaltet ist, vorgesehen, auf den Rebenpflock (1) aufgesteckt zu werden.

8. Abstandhalter (3) nach Anspruch 7, **dadurch gekennzeichnet, daß** der besagte Rebenpflock (1) mit Mitteln zum Halten (20) ausgestattet ist, die längs des besagten Pflockes (1) als ein oder mehrere Ausschnitte (21) und/oder Zünglein (22) ausgestaltet sind, die durch Bearbeitung, Verformung oder dergleichen des Materials, welches den besagten Pflock (1) bildet, realisiert sind.

9. Abstandhalter (3) nach Anspruch 7, **dadurch gekennzeichnet, daß** die Krampe (19) zwei Schenkel (23, 23 ') umfaßt, während die Mittel zum Schnallen (24) fähig sind, das Heranrücken dieser Schenkel (23, 23 ') zu sichern, um den besagten Rebenpflock (1) eng zu umfassen.

10. Abstandhalter (3) nach Anspruch 9, **dadurch gekennzeichnet, daß** die besagten Mittel zum Schnallen (24) als ein Bügel (25) ausgestaltet sind, vorgesehen, die besagten Schenkel (23, 23 ') zu überlappen und auf diese letztere insbesondere durch Festklammern angebracht zu werden.

## Claims

1. Spacer (3) including fastening means (5) allowing making it integral with a vine post (1), namely at its upper end (4), with a view to facilitating the tying-up, said spacer (3) adopting a form of metal wire (6) so shaped as to define two legs (7, 7') spaced apart and having, each, at least a cradle (8) for receiving tying-up wires (2), **characterised in that** it includes, in addition, hooking-in means (9) directly associated with at least one of its legs (7, 7') and capable of co-operating with the other leg (7, 7') with a view to maintaining them close to each other upon a vine-lifting operation.

2. Spacer (3) according to claim 1, **characterised in that** said hooking-in means (9) are in the form of a hook (12) resulting from distorting one at least of the ends (13, 13') of the metal wire (6), thus of the end of at least one of the legs (7, 7').

3. Spacer (3) according to claim 1, **characterised in that** the hooking-in means (9) are in the form of a hook (12) inserted against at least one of the legs (7, 7') of the metal wire (6) through adequate means, namely through welding, crimping or the like.

4. Spacer (3) according to claim 1, **characterised in that** the cradle (8) is defined by an open or closed loop (11).

5. Spacer (3) according to any of the preceding claims, **characterised in that** the fastening means (8) are in the form of one or several windings (16, 16') made by distorting the metal wire (6) and aimed at being tightened, namely elastically, around the vine post (1).

6. Spacer (3) according to any of claims 1 to 4, **characterised in that** said fastening means (5) are in the form of one or several loops (17, 17') for receiving and/or for the passing through of one or several organs (18) for fastening the wire (6) to the vine post (1), such as a nail, a screw or the like.

7. Spacer (3) according to any of claims 1 to 4, **characterised in that** the fastening means (5) are defined by a metal wire (6) shaped in the form of a support (19) aimed at being inserted onto the vine post (1).

8. Spacer (3) according to claim 7, **characterised in that** said vine post (1) is provided with retaining means (20) that are, alongside said post (1), in the form of one or several cut-outs (21) and/or tongues (22) made through machining, distortion or the like of the material forming said post (1).

9. Spacer (3) according to claim 7, **characterised in that** the support (19) includes two legs (23, 23'), while tightening means (24) are capable of ensuring bringing these legs (23, 23') closer to each other, with a view to enclose said vine post (1).

10. Spacer (3) according to claim 9, **characterised in that** said tightening means (24) are in the shape of a staple (25) aimed at being positioned on both sides of said legs (23, 23') and placed on the latter, namely through clipping on.
